Europäisches Patentamt

European Patent Office

Office européen des brevets

(11) Publication number: **0 050 481**
**B1**

# (12) EUROPEAN PATENT SPECIFICATION

(45) Date of publication of patent specification: **10.09.86**

(51) Int. Cl.⁴: **H 04 N 1/46**

(21) Application number: **81304806.3**

(22) Date of filing: **15.10.81**

(54) **Multi-colour image recording device.**

(30) Priority: 16.10.80 JP 143654/80
04.12.80 JP 170292/80
26.12.80 JP 183841/80
23.01.81 JP 7986/81
05.02.81 JP 15042/81

(43) Date of publication of application:
28.04.82 Bulletin 82/17

(45) Publication of the grant of the patent:
10.09.86 Bulletin 86/37

(84) Designated Contracting States:
DE FR GB

(56) References cited:
CH-A- 568 593
FR-A-2 103 837
FR-A-2 286 421
GB-A-2 022 018
US-A-3 069 681

PATENTS ABSTRACTS OF JAPAN, vol. 5, no.
66, 2nd May 1981, (E55)(738)

(73) Proprietor: FUJI XEROX CO., LTD.
No. 3-5, Akasaka 3-chome
Minato-ku Tokyo 107 (JP)

(72) Inventor: Fjio, Moriguchi c/o FUJI XEROX
COMPANY LIMITED
Ebina Works No. 2274, Hongo
Ebina-shi Kanagawa (JP)
Inventor: Haruhiko, Moriguchi c/o FUJI XEROX
COMPANY LIMITED
Ebina Works No. 2274, Hongo
Ebina-shi Kanagawa (JP)
Inventor: Takashi, Ohmori c/o FUJI XEROX
COMPANY LIMITED
Ebina Works No. 2274, Hongo
Ebina-shi Kanagawa (JP)
Inventor: Masami, Kurata c/o FUJI XEROX
COMPANY LIMITED
Ebina Works No. 2274, Hongo
Ebina-shi Kanagawa (JP)
Inventor: Tomio, Murayama c/o FUJI XEROX
COMPANY LIMITED
Ebina Works No. 2274, Hongo
Ebina-shi Kanagawa (JP)
Inventor: Katsuo, Makino c/o FUJI XEROX
COMPANY LIMITED
Ebina Works No. 2274, Hongo
Ebina-shi Kanagawa (JP)

**0 050 481**

(74) Representative: **Prutton, Roger et al**
**Marks & Clerk Alpha Tower Suffolk Street**
**Queensway**
**Birmingham B1 1TT (GB)**

## Description

This invention relates to a multi-colour image recording device intended primarily to be used in a multi-colour copying machine.

There have heretofore been known electrostatic photographic two-colour copying machines for recording pictures in two colours such for example as red and black. Such two-colour copying machines have a set of electrostatic recording drums or sheet members on which are formed electrostatic latent images, which are then developed with toners of respective hues. The toner images thus produced are transferred, without causing colour shifting, onto a sheet of recording paper, and then are thermally fixed to produce a recorded picture. While such a conventional two-colour copying machine can produce a number of copies by repeatedly exposing one original document, the copying machine is disadvantageous in that it consumes a great amount of electrical power in fixing the toner image to the recording paper. Since the fixing device of the prior copying machine radiates a considerable amount of heat, it requires a heat-shielding mechanism to protect other machine parts from such radiated heat, with the results that the machine is large in size as a whole and is expensive to construct.

It has also been proposed (FR—A—2103837) to produce multi-colour prints by locally heating a web for each colour by means of a laser beam, causing the appropriate coloured ink to be picked up by the heated areas of the web and transferring the ink to a continuous recording paper web. However, use of laser heating techniques is inconvenient and the printing machine disclosed in FR—A—2103837 is capable of handling continuous webs of recording paper only.

Another prior proposal (GB—A—2022018) makes use of a single ink donor web on which is printed a mosaic-like pattern of spots of differently coloured heat fusible ink. A thermal recording heat selectively heats these spots as a continuous web of recording paper and the donor web pass the head so that spots of ink are transferred to the recording paper. Such an arrangement gives relatively poor resolution and requires accurate register of the spots with the heads to ensure that only the correct colour ink is transferred. Moreover the mosaic-like pattern is relatively expensive to produce on the donor web.

It is an object of the invention to provide a multi-colour image recording device in a convenient form by means of which these problems in conventional machines are overcome.

In accordance with the invention there is provided a multi-colour image recording device having a plurality or printing stations at each of which a different colour ink is applied to recording paper as it is fed through each of the printing stations in turn characterised in that each printing station includes a means for feeding a web of ink donor sheet material having a continuous coating of heat fusible or heat sublimating ink thereon over a thermal head for selectively heating said ink donor sheet material whilst it is in pressure contact with a recording paper sheet to transfer the heated ink to the recording sheet, and in that each printing station incorporates recording sheet driving means so that separate sheets of recording paper are transported in a predetermined path, the donor sheet material web feeding means and the thermal heads all being on one side of said path and each of the donor sheet material webs being arranged so that the associated web moves past the associated thermal head in contact with the recording paper sheets.

To apply pressure to the recording paper sheet a pressure roller may be arranged on the opposite side of the path of the recording paper sheets from the ink donor sheets and the thermal head.

A separate pressure roller may be provided for each thermal head. In this case an endless flexible band may extend around the pressure rollers to transport the recording paper sheets as they pass along said path. Alternatively the ink donor sheets may be supported to travel adjacent said path so as to transport the recording paper sheets.

Alternatively there may be but a single pressure roller with the thermal heads positioned at circumferentially spaced positions around such single pressure roller.

In the accompanying drawings:—

Figure 1 is a diagrammatic representation of a two-colour copying machine incorporating an example of a multi-colour image recording device in accordance with the invention;

Figure 2 is a plan view of a control panel of the machine of Figure 1;

Figure 3 is a block diagram of an electrical control circuit of the machine of Figure 1;

Figures 4 and 5 are views like Figures 1 and 3 but showing an alternative form of machine;

Figure 6 is a diagrammatic view showing an alternative embodiment of a copying device in accordance with the invention for incorporation in a three-colour copying machine;

Figure 7 is a graph showing the timing of various electrical signals in the embodiment of Figure 6;

Figure 8 is an explanatory view showing a recording paper sheet;

Figure 9 is a block diagram of an electrical circuit employed in the example shown in Figure 6;

Figure 10 is a diagrammatic view of a third example of the invention;

Figure 11 is a diagrammatic view of a fourth example of the invention;

Figure 12 is an enlargement of a portion of Figure 11;

Figure 13 is a view like Figure 12 but showing a modified paper separating arrangement;

Figure 14 is a diagrammatic view of a fifth example of the invention; and

Figure 15 is an enlarged fragmentary perspective view of a band employed in the example of Figure 14.

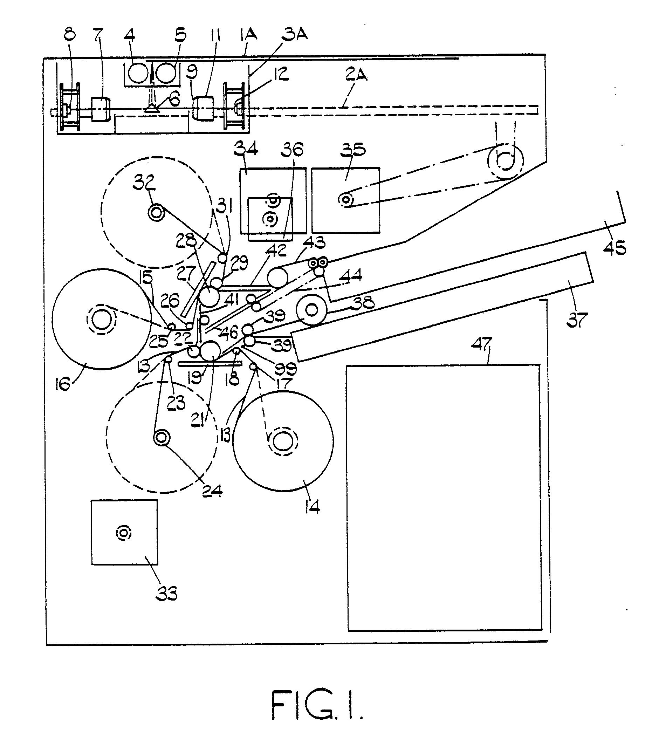

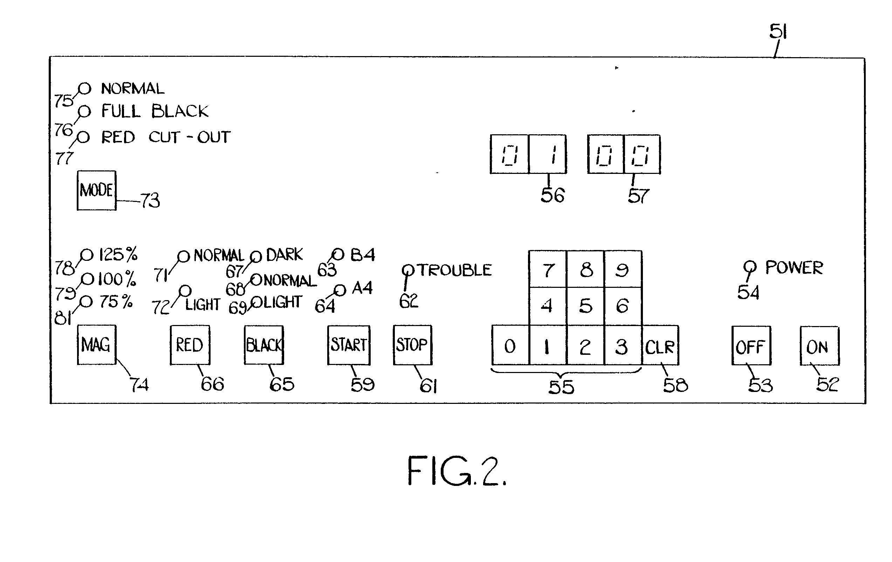

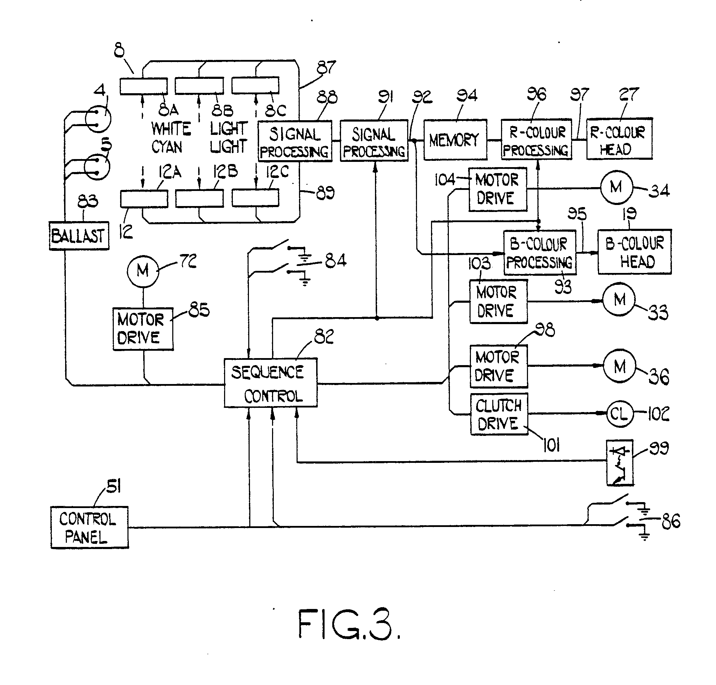

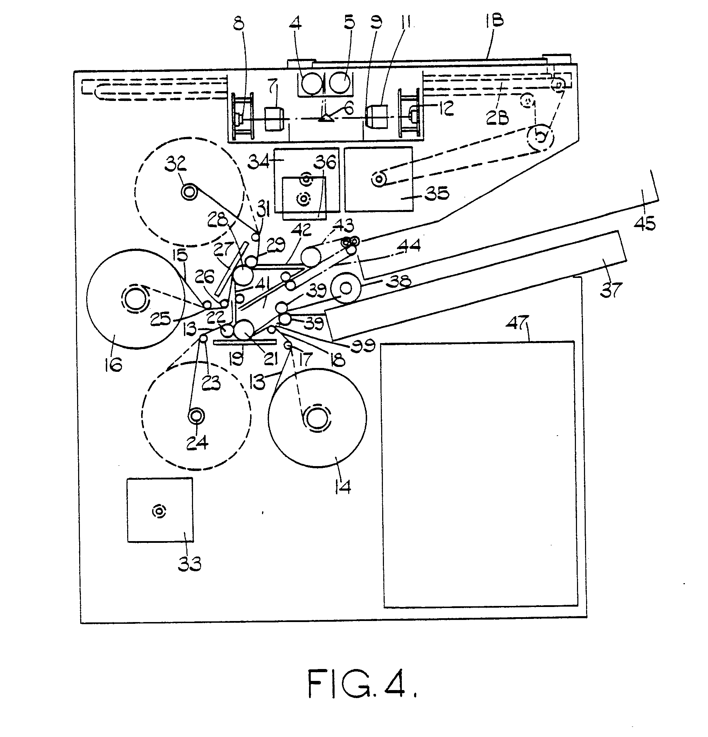

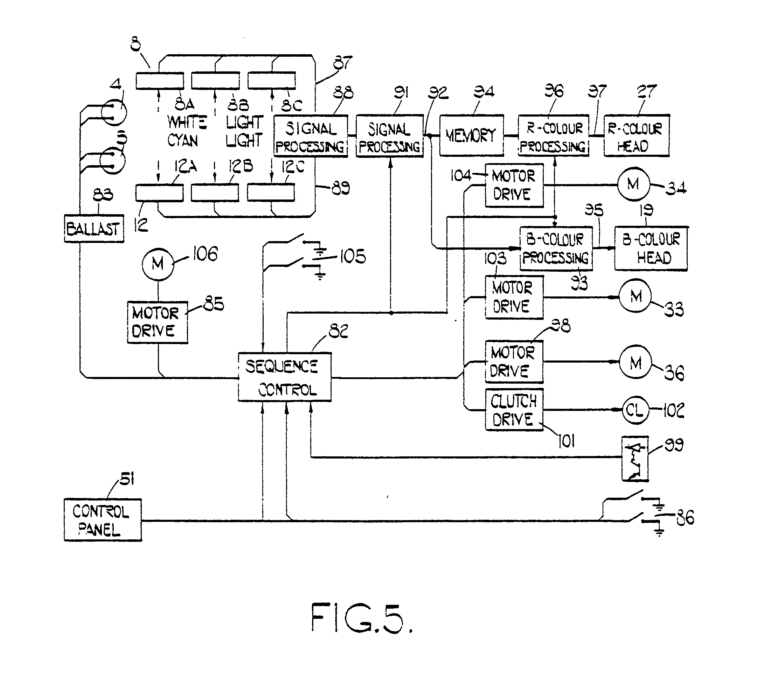

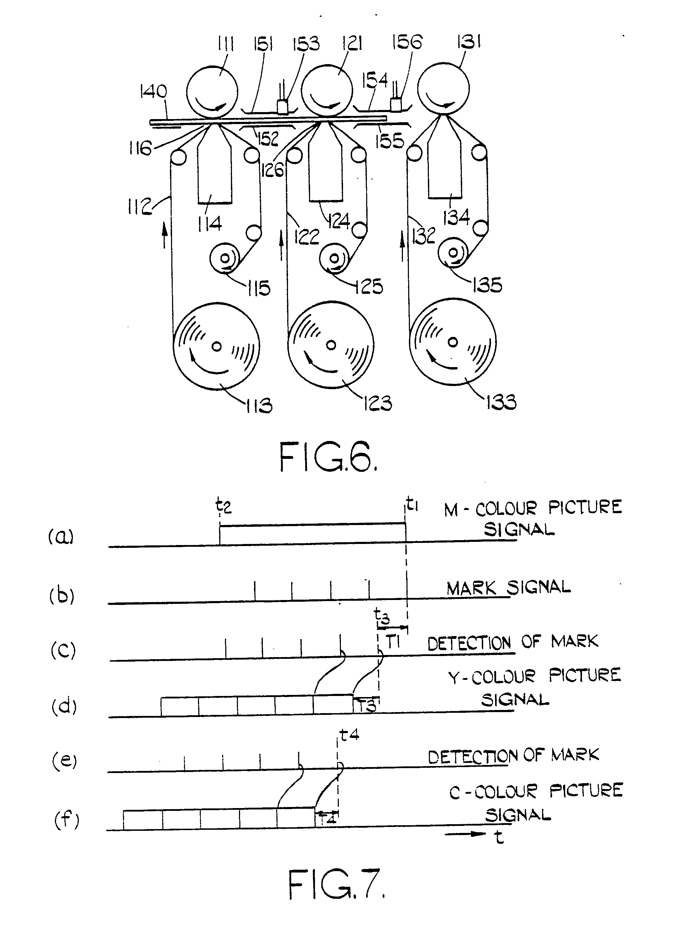

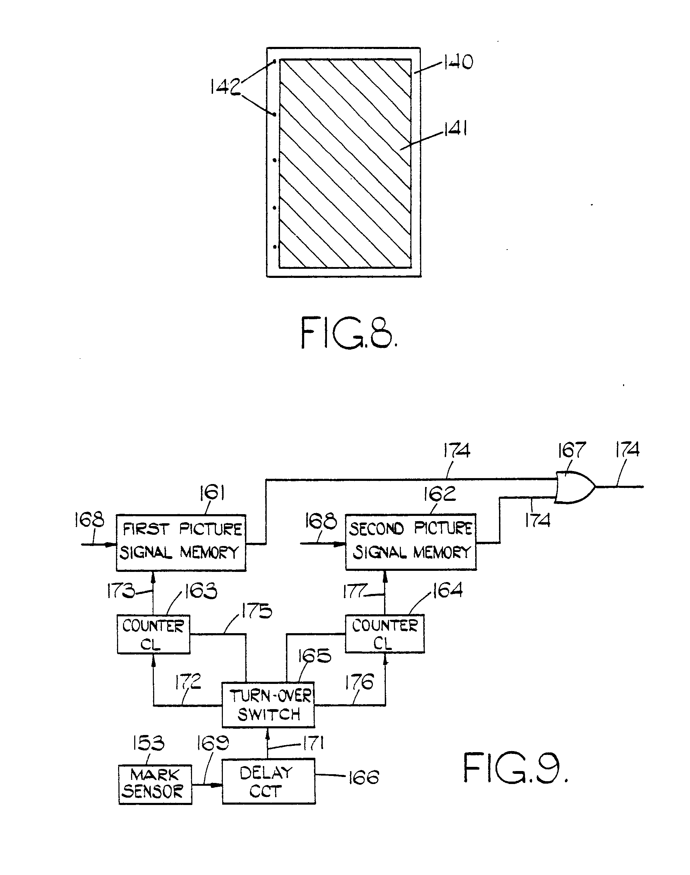

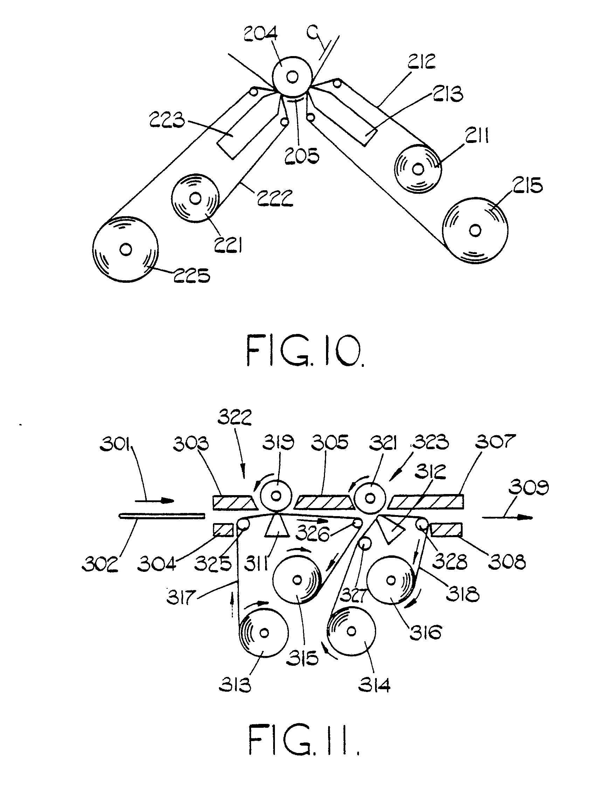

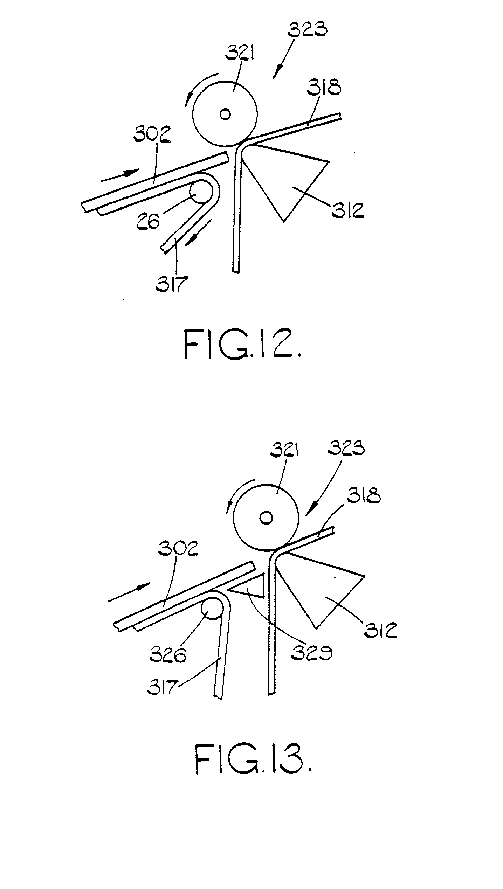

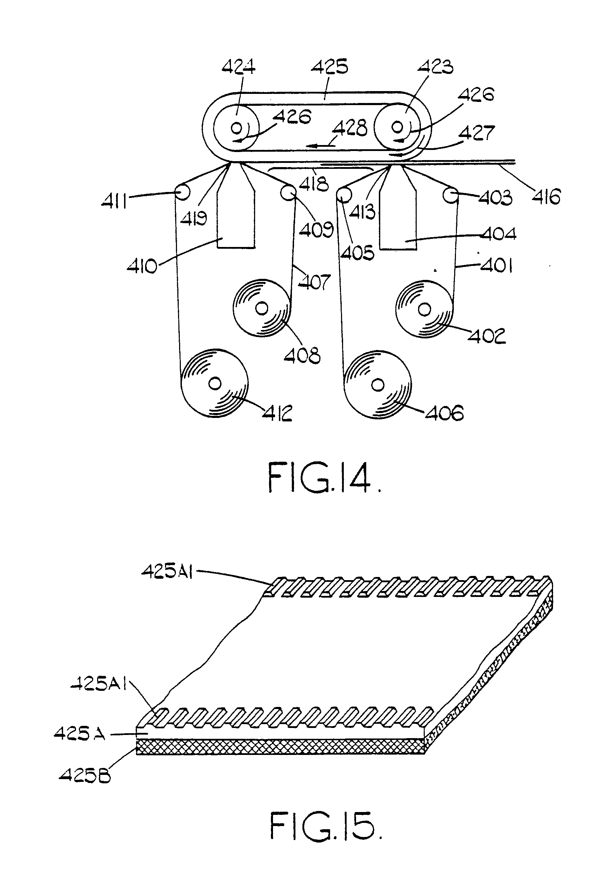

Figure 1 is a diagrammatic view of a two-colour copying machine which comprises a picture image read-out device for reading out picture information from an original document to be copied, and a two-colour recording device for producing a bicolour recorded picture based on the picture information.

The picture image read-out includes a fixed platen 1A for the placing thereon of an original document and a scanner unit 3A reciprocably movable on a rail 2A parallel to the platen 1A. The scanner unit 3A has a pair of fluorescent lamps 4, 5 which are slightly longer than the width of the platen 1A and extend in a direction (main scanning direction) normal to the direction in which the scanner unit 3A is movable, the lamps 4, 5 being spaced a predetermined distance from each other. A reflective mirror 6 is disposed below the fluorescent lamps 4, 5, for directing light reflected from the surface of the original document into two directions. In a path of one beam of light reflected by the mirror 6, there are disposed a lens 7 for focussing an im age of light and an image sensor 8 for converting the image of light into corresponding electrical signals. In the illustrated embodiment, the image sensor 8 reads out information of only a black-coloured picture.

Located in a path of the other beam of light reflected by the mirror 6 are a cyan filter 9 for absorbing a red-coloured ray of light, a lens 11 for converging the beam of light having passed through the filter 9, and an image sensor 12 for converting the light image into corresponding electrical signals. The image sensor 12 reads out information of both black-coloured and red-coloured images in the illustrated embodiment.

The scanner unit 3A also contains a circuit (described in detail later on) for processing picture signals generated as outputs from the image senors 8, 12.

The two-colour recording device includes a B-colour supply roll 14, comprising a B-coloured ink donor sheet 13 for recording in black, rolled around a tube of paper, and an R-colour supply roll 16, comprising an R-colour ink donor sheet 15 for recording in red, rolled around a tube of paper. The B-colour ink donor sheet 13 as unrolled from the B-colour supply roll 14 is arranged around a guide roll 17 and a tension take-up roll 18 and then between a B-colour thermal head 19 and a B-colour pressure roll 21. The B-colour ink donor sheet 13 then passes between the B-colour pressure roll 21 and a B-colour drive roll 22, and is wound via a guide roll 23 around a B-colour take-up roll 24. The R-colour ink donor sheet 15 as unrolled from the R-colour supply roll 16 is arranged around a guide roll 25 and a tension take-up roll 26 and then between an R-colour thermal head 27 and an R-colour pressure roll 28. Then, the R-colour ink donor sheet 15 passes between the R-colour pressure roll 28 and an R-colour drive roll 29, and is wound via a guide roll 31 around an R-colour take-up roll 32. The feeding system for the B-colour ink donor sheet 14 is driven by a B-colour printer motor 33, and the feeding system for the R-colour ink donor sheet 15 is driven by an R-colour printer motor 34.

A scanner motor 35 and a recording paper motor 36 are located adjacent to the R-colour printer motor 34. The scanner motor 35 comprises a stepper motor for moving reciprocably the scanner unit 3A through belt transmission. The recording paper motor 36 comprises a stepper motor for supplying through a paper feeding roll 38 sheets of recording paper stacked in a paper feeder 37 to a place where thermal transfer recording is carried out. A sheet of recording paper as supplied from the paper feeder 37 is positionally adjusted for registration by a register roll 39, and is then caused to overlap the B-colour ink donor sheet 13 for recording in black between the B-colour thermal head 19 and the B-colour pressure roll 21. A recording paper switching device 41 is disposed above the B-colour pressure roll 21 and the B-colour drive roll 22 for switching the path of advancing movement of the sheet of recording paper as having passed between the rolls 21, 22. When the recording paper switching device 41 is in one position it guides the sheet of recording paper as peeled off from the R-colour ink donor sheet 15 to overlap the R-colour thermal head 27 and the R-colour pressure roll 28 for recording in red. Thereafter, the sheet of recording paper passes through a guide 42 and is discharged by a pair of feed belts 43, 44 into a paper catch tray 45. When the recording paper switching device 41 is in its other position it guides the sheet of recording paper to move obliquely upwardly passing through a guide 46 having an inlet located obliquely upwardly of the rolls 21, 22, to be discharged by the feed belts 43, 44 into the paper catch tray 45. A box 47 housing a paper supply and a control circuit for the copying machine is disposed below the paper feeder 37.

The two-colour copying machine will now be described in more detail for its construction and copying operation.

Figure 2 is illustrative of a control panel of the two-colour copying machine. The control panel 51 contains a number of switches and a pair of counters. The power supply is turned on and off by a power supply energizing switch 52 and a power supply de-energizing switch 53, respectively. When the power supply is switched on, a power indicator 54 is lit so as thereby to let the operator know, with indication of various other indicators, that the copying machine is ready for operation. Ten keys 55 set the number of copies to be made, such number being indicated in a set counter 56. An output counter 57 is located adjacent to the set counter 56 for successively indicating adjacent to the set counter 56 for successively indicating the number of copies that have been made. Recording is completed when the counters 56, 57 have the same indications as each other. When it is needed to change the number indicated by the set counter 56, then a clear button 58 is depressed and thereafter the new required number of copies to be made is set again by the ten keys 55. However, such new number of copies to be printed can be set in the set counter 56 even if the clear button 58 is not depressed, when the ten keys 55 are manipulated five seconds after the set counter 56 has indicated the former set number of copies.

A start switch 59 and a stop switch 61 are located substantially centrally of the control panel 51. The start switch 59 when depressed starts copying operation, and the stop switch 61 when depressed stops operation of the copying machine. When the sheet of thermosensitive recording paper gets jammed in the copying machine or some other abnormal situations requiring immediate attention takes place, operation of the copying machine will be interrupted even if the stop switch 61 is not depressed. In such cases, a trouble indicator 62 flickers to inform the operator of the trouble, and continues to flicker and the copying machine does not start to operate even if the start switch 59 is depressed until the operator takes proper corrective action and depresses the clear button 58.

Above the start switch 59, there are disposed a B4-size indicator 63 and an A4-size indicator 64. The copying machine has a size switch (described later) for determining the width of a sheet of recording paper, and the size indicator 63 or 64 indicates, upon such determination, whether the sheet inserted in the copying machine is of an A4-size or B4-size. Simultaneously therewith, the interval of scanning by the scanner unit and the width of recording by the thermal head are automatically determined to save power consumption and prevent the rolls in the two-colour recording device from getting smeared due to printing in unwanted areas.

A black density changing switch 65 and a red density changing switch 66 are positioned to the left of the start switch 59. These switches serve to establish several steps of recorded density in black and red by changing in small increments the amount of heat generated by the thermal head. Each time the black density changing switch 65 is depressed, indicators 67—69 indicative of three densities "dark", "normal", and "light" are successively lit one at a time to select and indicate the recording density in black. Likewise, each time the red density changing switch 66 is depressed, either one of indicators 71, 72 indicates one of two densities "normal" and "light" to select the recording density in red.

A mode selection button 73 and a magnification setting button 74 are positioned at the left end of the control panel 25. The mode slection button 73 is provided for selecting colours in which recording is to be effected. Each time the mode selection button 73 is depressed, one of three colour modes is selected at a time. When a "normal" mode is selected, a normal indicator 75 is lit. In such a colour mode, information of a red picture is recorded in red and information of a black picture is recorded in black. When a "full black" mode is selected, a full black indicator 76 is lit. In such a colour mode, information of a red picture and information of a black picture are recorded all in black. When a "red cut-out" mode is selected, a red cut-out indicator 77 is lit. In this colour mode, information of a black picture is recorded in black, but information of a red picture is cut out and no recording is effected therefor.

A magnification button 74 establishes magnifications of duplication. Each time the magnification button 74 is pressed down, the magnification of duplication is changed cyclically from 125% to 100% to 75%, and such magnifications are indicated successively by indicators 78, 79, 81.

When the operator places an original document on the platen 1A shown in Figure 1 and depresses the power supply turn-on switch 52 on the control panel 51, the power indicator is lit to energize the copying machine.

Figure 3 illustrates an electrical control circuit for the copying machine. When the start button 59 on the control panel 51 is depressed, a sequence control unit 82 determines whether or not the copying machine is ready for operation. If the copying machine is ready with no abnormal conditions present, then the sequence control unit 82 supplies power to a high-frequency ballast 83 to turn on fluorescent lamps 4, 5 each rated at 15 W. At the same time, the scanner unit 3A (Fig. 1) is in a start condition, based on positional information supplied from scanner position detecting switches 84 located adjacent to the end of the rail 2A (Figure 1). When the scanner unit 3A is not in the home position, the sequence control circuit 82 supplies power to a motor drive circuit 85 to drive the scanner motor 35 until the scanner unit 3A is set in a home position. If the scanner unit 3A is not set in such a home position within a predetermined interval of time, the sequence control unit 82 regards such a condition as abnormal, thus de-energizing the copying machine and enabling the trouble indicator 62 to flicker.

On the other hand, when the scanner unit 3A is set in the home position within such a predetermined interval of time, the scanner position detecting switches 84 confirm such a condition, and then the sequence control unit 82 energizes the motor drive circuit 85 with a predetermined timing to drive the scanner motor 35 in a forward or rearward direction, thereby reciprocably moving the scanner unit 3A. When the set counter 56 (Fig. 2) is set "1" or one copy is to be produced, the sequence control unit 82 controls the scanner motor 35 so that the scanner unit 3A returns rapidly to the home position. When, on the other hand, a number of copies are to be produced, the scanner unit 3A is controlled to move at a uniform speed in forward and rearward directions as picture information is read out during both advancing and returning movements of the scanner unit 3A. The distance which the scanner unit 3A moves in a subscanning direction is determined by the sequence control unit 82 based on information as to the size of a recording sheet supplied from the paper size detecting switch 86, positional information supplied from the scanner position detecting switches 84, and the magnification of duplication selected by the control panel 51.

When the scanner unit 3A starts moving in a forward or a rearward direction, the image sensors 8, 12 convert images of light into electrical signals per line. The image sensors 8, 12 may for example comprise three rectilinearly arranged photodiode arrays 8A—8C, 12A—12C, respectively, each having 1,024 photoelectric conversion elements for reading out, with a resolving power of 12 dots/mm, picture information of one line on an original document of a B4 size having a width of 256 mm. CCDs (Charge Coupled Devices) or other image pick-up elements may be employed for the image sensors 8, 12.

The image sensor 8 which photoelectrically converts directly the reflected light from the original document supplies video signals 87 successively to a first picture signal processing circuit 88 according to clock signals supplied from a clock generator (not illustrated). Such video signals are signals indicative of information of a black picture as determined by brightness. The image sensor 12 which photoelectrically converts the reflected light from the original document after it has passed the cyan filter 9 (Fig. 1) supplies video signals 89 successively to the first picture signal processing circuit 88 according to the foregoing clock signals. The video signals 89 are signals indicating information of black and red pictures as read out equally as black-picture information.

The first picture signal processing circuit 88 synthesizes these video signals 87, 89 into two kinds of time series signals. Such time series signals are then processed to produce a time series signal corresponding to an image of light having passed through a red filter. Thus, there are generated three kinds of picture signals, that is, a white signal corresponding to the brightness of the original document, a cyan signal produced through the cyan filter, and a red signal which is equivalent to that produced through a red filter. The first picture image processing circuit 88 causes these three picture signals to pass through an automatic background control circuit for background correction processing to thereby remove noises (background) of the picture signals. The picture signals are thereafter converted by a binarizing circuit into binarized or two-valued signals. Accordingly, three kinds of binarized signals are produced which are stable and not adversely affected by a change in the amount of light. The first picture signal processing circuit has a white-line skipping function such that when a line to be read out next is all white (in background colour), read-out of such a line will be skipped or omitted. To carry out such a function, it is desirable for the image sensors 8, 12 to be constituted of image pick-up elements which can read out two lines at the same time.

The binarized signals supplied as outputs from the first picture signal processing circuit 88 are supplied to a second picture signal processing circuit 91. The second picture signal processing circuit 91 first prepares signals of red and black pictures by processing the binarized signals of white, cyan and red pictures. Such two kinds of generated signals are then subjected to line density conversion, which means conversion of picture signals read out by the image sensors 8, 12 and having a line density of 12 dots/mm in accordance with the magnification selected by the magnification button 74 (Fig. 2). For example, a line density of 12 dots/mm is converted into a line density of 8 dots/mm when the magnification is 100% (no magnification), a line density of 12 dots/mm when the magnification is 75% (reduction to 3/4), and a line density of 12 dots/mm is converted into a line density of 10 dots/mm when the magnification is 125% (enlargement to 5/4). Converted series binarized picture signals 92 are controlled by the sequence control circuit 82 so as to be supplied to a B-colour picutre signal processing circuit 93 and a picture signal memory 94.

Such series binarized picture signals 92 can be transmitted as series signals to an external receiver apparatus such as a facsimile receiver. Therefore, the copying machine may have an external transmission terminal for transmitting the series binarized picture signals, and such a terminal can be connected via a modem to a telephone circuit, an inter-office communication circuit, or radio transmission circuit.

When the "normal" mode or "red cut-out" mode is selected with the mode selection button 73 (Fig. 3), the B-colour picture signal processing circuit 93 writes a series binarized picture signal as to black into the memory, and reads out the picture signals in a forward or reverse direction depending on the direction of scanning by the scanner unit 3A (Fig. 1). More specifically, since the scanner unit 3A reads out the picture signals on both its advancing and returning movements when a plurality of copies are made, and if the order of read out on the advancing moment is deemed as forward, then the order of read out on the returning movement is regarded as reverse, re-arrangement of the picture signals is necessary to prevent the picture image recorded on the returning movement from becoming the mirror image. Therefore, read out from the memory is effected such that if it progresses in a forward direction when the scanner unit advances, then the read out progresses in a rearward direction when the scanner unit returns. Such re-arrangement of picture signals is unnecessary when making only one copy of the original document or when receiving picture signals via an external reception terminal.

The black series binarized picture signals read out of the memory are converted from series to parallel so as to be supplied to the B-colour thermal head 19. Thus, a succession of parallel picture signals are generated for one line or one block which corresponds to one of a plurality of separately driven heater groups. Such parallel picture signals are caused to pass through a recording width control circuit in which the picture signals are cut out that correspond to a region other than a region where the B-colour thermal head 19 is held in contact with the B-colour ink donor sheet 13. To that effect, the sequence control unit 82 feeds size information supplied from the recording paper size detecting switch 86 into the B-colour picture signal processing circuit 93. The reason for limiting a recording width depending on the size of recording paper is to prevent the B-colour backing roll 21 (Fig. 1) from getting dirty due to heating of an unnecessary region of the B-colour ink donor sheet 14.

After having passed through the recording width control circuit, the black parallel picture signals are then supplied to a recording density selecting circuit, which controls the peak value (or pulse width) of the parallel picture signals in three steps in conformity with recording densities in black indicated by the control panel 51. Picture signals 95 thus produced are supplied to the B-colour thermal head 19.

When the "full black" mode is selected with the mode selection button 73, the B-colour picture signal processing circuit 93 is supplied with synthesized black and red picture signals, which are processed into black picture signals, as described above, which are then supplied to the B-colour thermal head 19.

The picture signal memory 94 is a delay memory which serves to effect bicolour recording without allowing generation of colour shifting or misalignment on a sheet of recording paper which passes over both the B-colour thermal head 19 and the R-colour thermal head 27 as shown in Figure 1. In the illustrated embodiment, the heater resistors of the thermal heads are spaced from each other by a distance of 100 mm, and the picture signal memory 94 has a capacity of about 1.6 M bits with the speed of travel of the recording paper in view.

The picture signal memory 94 is supplied with the red series binarized picture signals only when the "normal" mode is selected with the mode selection button 73. Such picture signals are supplied to an R-colour picture signal processing circuit 96 upon lapse of a predetermined delay time. The R-colour picture signal processing circuit 96 processes the supplied signals, as with the B-colour picture signal processing circuit 93, into picture signals 97 which are then fed into the R-colour thermal head 27. In a recording density selection circuit of the R-colour picture signal processing circuit 96, the peak value (or pulse width) of the parallel picture signals is controlled in two steps in conformity with recording densities in red indicated by the control panel 51.

When the start button 59 is depressed with no abnormal condition present in the copying machine to thereby set the scanner unit 3A in the home position, the sequence control unit 82 supplies power to a recording paper motor drive circuit 98 to energize the recording paper feeding motor 36. When the recording paper feeding motor 36 is operated, a sheet of recording paper is fed by the feed roll 38 out of the paper feeder 37. The feed roll 38 continues rotating until the leading edge of the sheet of recording paper goes past the register rolls 39 and is sensed by a register sensor 99 located immediately downward of the register rolls 39. Upon sensing by the register sensor 99 of the sheet of recording paper, the sequence control unit 82 energizes a clutch drive circuit 101 to operate an electromagnetic clutch 102, whereupon the feed roll 38 is disconnected from the recording paper feed motor 36 and the sheet of recording paper is fed by the register rolls 39.

When the register sensor 99 senses the sheet of recording paper, the sequence control unit 82 starts counting pulses which the recording paper motor drive circuit 98 supplies to the recording paper feed motor 36. When the leading edge of the sheet of recording paper reaches a point immediately in front of the heating resistor of the B-colour thermal head 19, the sequence control unit 82 energizes a B-colour motor drive circuit 103 to drive the B-colour printer motor 33. At this time, the B-colour ink donor sheet 13 starts to be fed. This is to avoid unnecessary consumption of the B-clolour ink donor sheet 13.

When the B-cololur ink donor sheet 13 starts being fed, the sheet of recording paper passes between the B-colour thermal head 19 and the B-colour backing roll 21 as the sheet of recording paper is sandwiched between the B-colour ink donor sheet and the B-colour pressure roll 21. At this time, the B-colour ink donor sheet 13 is prevented from being wrinkled by the automatic balancing tension take-up roll 18 which is displaceable under the tension applied to the sheet. The B-colour ink donor sheet 14 comprises a base coated on one surface thereof with thermally fusible or thermally sublimatable black solid ink, which is fused or sublimated upon being heated by the B-colour thermal head 19 that is selectively heated in response to the picture signals 95, whereby black ink is thermally transferred to the sheet of recording paper.

The amount of feed of the sheet of recording paper per one scanning line as effected by the B-colour pressure roll 21 driven by the B-colour drive roll 22 varies with the magnification of duplication selected by the control panel 51, the ratios between the magnification and the amount of feed being 75%: 100%: 125% = 3:4:5.

The sheet of recording paper as printed passes between the B-colour pressure roll 21 and the B-colour drive roll 22 while overlapping the B-colour ink donor sheet 13. Then, the B-colour ink donor sheet 13 abruptly changes its path and is wound around the B-colour ink donor sheet take-up roll 24 loaded with a predetermined force by a slip friction clutch. The sheet of recording paper is separated from the B-colour ink donor sheet 14 as the former cannot follow the sudden change of path of the B-colour ink donor sheet 13.

The separated sheet of recording paper is guided by the recording paper switching device 41 to move toward R-colour thermal head 27 only when the mode selection button 73 (Fig. 2) indicates the "normal" mode. When the leading edge of the sheet of recording paper arrives at a point just in front of the heating resistor of the R-colour thermal head 27 as determined by the count of the above-mentioned pulses, the sequence control unit 82 energizes the R-colour motor drive circuit 104 to drive the R-colour printer motor 34. At this time, the R-colour ink donor sheet 15 starts being fed for thermal transfer recording.

The R-colour ink donor sheet 15 comprises a base coated on one surface thereof with thermally fusible or thermally sublimatable red solid ink, which is fused or sublimated upon being heated by the R-colour thermal head 27 that is selectively heated in response to the picture signals 97, whereby red ink is thermally transferred to the sheet of recording paper.

The amount of feed of the sheet of recording paper per one scanning line as effected by the R-colour pressure roll 28 driven by the R-colour drive roll 29 is also adjusted by the selected magnification of duplication.

The sheet of recording paper as thus printed is separated from the R-colour ink donor sheet 15 in the same manner as described above, and is discharged via the guide 42 and the feed belts 43, 44 into the paper catch tray 45.

When the "full black" mode or the "red cut-out" mode is selected by the mode selection button 73, the recording paper switching device 41 guides the sheet of recording paper into the guide 46. Then, the sheet of recording paper is discharged by the feed belts 43, 44 into the paper catch tray 45 without being printed in red. Based on the count of the above-mentioned pulses, the sequence control unit 82 controls timings for stopping the B-colour printer motor 33 and the R-colour printer motor 34. When the recording operation is completed, the sequence control unit 82 commands the copying machine to be in a standby mode for the next copying operation.

Since the platen 1A of the copying machine according to the foregoing embodiment is fixed there is no danger of damaging an original document which may not be the case with a movable platen.

Figure 4 shows a modified two-colour copying machine. Like parts are denoted by like reference numerals in Figures 1 and 4. The two-colour copying machine illustrated in Figure 4 includes a different picture image read-out device for reading picture information out of an original document to be copied. Only such device will be described, and no description of other parts will be given as they are the same as those of the foregoing embodiment.

The picture image read-out device comprises a platen 1B reciprocably mounted on a rail 2B attached to an upper portion of the copying machine proper, and a fixed scanner unit 3B for reading out picture information through raster scanning.

Figure 5 illustrates an electrical control circuit for the copying machine of Figure 4. Like parts are denoted by like reference numerals and characters in Figures 3 and 5. With the copying machine according to the second embodiment, when the start switch 59 is depressed, the platen 1B is set in a home position based on positional information supplied from a platen position detecing switch 105 corresponding to the scanner position detecting switch 84 (Fig. 4). When the platen 1B is set in such a home position within a predetermined interval of time, the sequence control unit 82 regards such a condition as abnormal, thus de-energizing the copying machine and enabling the trouble indicator 62 (Fig. 2) to flicker. On the other hand, when the platen 1B is set in a home position within the required time interval, such a condition is confirmed by the platen position detecting switch 105. Then, the sequence control unit 51 energizes the motor drive circuit 85 at a predetermined timing to rotate a platen motor 106 in a forward or reverse direction for reciprocable movement of the platen 1B. For producing a single copy, the sequence control unit 82 controls the platen 1B rapidly back into the home position. For printing a number of copies, however, the platen 1B moves at a uniform speed on its forward and rearward stroke as picture information is read out on both forward and rearward movements of the platen 1B. The distance that the platen 1B is to move in a subscanning direction is determined by the sequence control unit 82 based on size information supplied from the recording paper size sensing switch 86, positional information supplied from the platen position detecting switch 105, and the magnification of duplication selected by the control panel 51.

When the platen 1B thus starts moving in a forward or rearward direction, the image sensors 8, 12 in the scanner unit 3B convert an image of light for one line into electrical signals. Video signals 57, 59 thus generated are processed by the picture signal processing circuits 88, 91, 93, 96. The black and red picture signal processing circuits 93, 96 re-arrange picture signals generated upon scanning by the platen 1B moving in the rearward direction. Picture signals 95, 97 produced as outputs from the picture signal processing circuits 93, 96 are supplied to the corresponding thermal heads 19, 27 for recording on the sheet of recording paper in desired colours.

As the platen 1B of the modified copying machine as described above is movable, the copying machine can be designed so as to be relatively small in size.

Thermal transfer recording system is employed for enabling picture information to be recorded on ordinary paper with a reduced amount of power consumption.

While in the illustrated embodiments, the two-coloured copying machine has been described mainly for its copying operation, the copying machine can effect transmission of picture images to and reception of them from external apparatus as the machine is equipped with a device for reading out picture information and a device for recording such picture information. With the use of such external apparatus, therefore, picture image processing such as image synthesis, removal of a portion of the image, or image shifting is possible, and thereafter the processed image can be fed for producing a recorded picture. Where a great amount of picture information is to be transmitted to or received from the external apparatus, means for communication by light using optical fiber can be put to effective use. While in the illustrated embodiment recording colours are black and red, the present invention is not limited to such colours.

Figure 6 shows another embodiment of a multi-colour recording device having three recording sections. In this multi-colour recording device, a first recording section for conducting recording with magenta colour comprises a first pressure roll 111, an ink donor sheet 112 for M-colour in which magenta colour ink is coated on a substrate, a first feed roll 113 for feeding an ink donor sheet 112 for M-colour ink, a first thermal recording head 114 that contacts the first pressure roll 111 by way of ink donor sheet 112 for M-colour thus fed, and a first take-up roll 115 for recovering the ink donor sheet 112 for M-colour after transfer. A second recording section for conducting recording with yellow colour comprises a second pressure roll 121, an ink donor sheet 122 for Y-colour in which yellow ink is coated on a substrate, a second feed roll 123 for feeding an ink donor sheet 122 for Y-colour, a second thermal recording head 124 that contacts the second pressure roll 121 by way of the thus supplied ink donor sheet 122 for Y-colour ink, and a second take-up roll 125 for recovering the ink donor sheet 122 for Y-colour after transfer. Further, a third recording section for conducting recording with cyan colour comprises a third pressure roll 131, an ink donor sheet 132 for C-colour in which cyan colour ink is coated on a substrate, a third feed roll 133 for feeding the ink donor sheet 132 for C-colour, a third thermal recording head 134 that contacts the third pressure roll 131 by way of the thus supplied C-colour ink donor sheet 132, and a third take-up roll 135 for recovering the ink donor sheet 132 for C-colour after transfer. A pair of paper guides 151, 152 are disposed for guiding the running of the paper 140 to a paper conveying passage between the first recording section and the second recording section, and a first mark sensor 153 is mounted near the second pressure roll 121 of the paper guide 151. In the same way, a pair of paper guides 154, 155 for guiding the running of the paper 140 are provided to the recording sheet conveying passage between the second recording section and the third recording section, and a second mark sensor 156 is mounted near the third pressure roll 131 of the paper guide 154.

Now, when a start button (not shown) is pushed, a recording operation for the multi-colour recording device is started. A multi-colour recording printer comprises a clock generator (not shown) for generating various reference signals. The clock generator outputs step signals for conveying paper from the time the start button is pushed. The step signals are supplied by way of a pulse motor driving circuit (not shown) to a pulse motor (also not shown). Thus, a feed roll (not shown) is driven to send out the paper 140 before the first recording section.

At this time point, the clock generator outputs step signals for running the ink donor sheets. The step signals are supplied by way of other pulse motor driving circuit (not shown) to other pulse motors (also not shown). Thus, the pressure rolls 11, 121, 131, the feed rolls 113, 123, 133 and the take-up rolls 114, 124, 134 in each of the recording sections start to rotate at equal speed in the direction of arrows respectively, wherein the ink donor sheets 112, 122, 132 are caused to run in the direction of arrows under the constant tension. As the result, when the paper 140 is sent out to a position where the leading end arrives at the contact portion (transfer section) 116 between the first pressure roll 111 and the ink donor sheet 112 f r M-colour, the paper is thereafter conveyed in the direction of an arrow along the conveying passage by the pressure rolls 111, 121, 131 in each of the reading sections.

At a time point t1 (Fig. 7a) at which the leading end of the paper 140 arrives at the transfer station 116 in the first recording section, picture signals for magenta colour recording (hereinafter referred to as M-colour picture signals) are started to be fed from a word processor (not shown). The M-colour picture signals are fed as they are to a thermal recording head driving circuit for recording magenta colour (not shown), to thereby drive the first thermal recording head 114. As the result, thermal transfer recording is started from the time point t1 by the M-colour picture signals as shown in Figure 7a.

The clock generator referred to above generates mark signals over a time at a predetermined period from the time point t1 to the time point t2 at which magenta colour recording is completed (Fig. 7b). These mark signals are supplied to heat generation element arranged near the starting point for the main scanning of the first thermal recording head 114. As the result, picture information 141 is recorded on the paper 140, as well as dot-like marks 142 are recorded successively at the blank portion on the side end of the paper as shown in Figure 8. These marks 142 are utilized for the registration of the recording positions in the second recording section and the third recording section.

Figure 9 shows a control circuit for the registration of the recording position in the second recording section. The control circuit comprises first and second picture signal memories 161, 162, first and second read counters 163, 164 for reading out picture signals for Y-colour recording (hereinafter referred to as Y-colour picture signals) from these picture signal memories, a turn-over switch 165 from controlling these read counters, a delay circuit 166 for operating the turn-over switch 165 while making a delay in the output of the first mark sensor 153, and an OR circuit 167 for feeding the picture signals to a driving circuit concerning the second thermal recording head 124.

The Y-colour picture signals 168 fed from the word processor to the multi-colour recording device are written into the first and the second picture signal memories 161, 162 alternately on every predetermined time, the writing being started at first for the first picture signal memory 161. Picture signals written into the first and the second picture signal memories 161, 162 are written overlapping each other with time in the switching period, and the length of the time for the picture signals on every writing to the respective picture signal memories is set slightly longer than the generation period of the mark signals.

Then, when the paper 140 is conveyed to the second transfer station 126 of the second recording section, the first mark sensor 153 detects the mark 142 (Fig. 7c). The elapse of time T1 from the time point t1 at which the first mark has been recorded to the time point t2 at which the mark is detected by the first mark sensor 153 is a value which varies depending on various conditions such as the distance between the first thermal recording head 114 and the first mark sensor 153, conveying speed for the paper 140, slack in the paper 140 or the like. The delay counter 166 at first determines the time T2 required for the mark 142 to move from the first thermal recording head 114 to the second thermal recording head 124 based on the elapsed time T1. The time T3 prepared by subtracting the elapsed time T1 from the time T2 (Fig. 7d) is a time elapsing from the detection of the mark 142 by the first mark sensor 153 to the arrival of the position in the paper described with the mark at the second thermal recording head 124. The delay counter 166 sets the time T3 as a delay time.

Consequently, when the detection signals 169 for the mark 142 are successively outputted from the first mark sensor 153 to the delay counter 166, the delay counter 166 successively supplies the delayed detection signals 171 to the turn-over switch 165. When the first detection signal 171 is supplied, the turn-over switch 165 outputs the detection signal as the start signal 172 to the first read counter 163. Thus, read signals 173 are supplied from the first read counter 163 to the first picture signal memory 161, and the Y-colour picture signals 174 are started to be fed from the first picture signal memory 161 to the head driving circuit by way of the OR circuit 167.

When the delay counter 166 generates a second detection signal 134 at a subsequent time point, the turn-over switch 165, receiving the signal, supplies a clear signal 175 to the clear terminal CL of the first read counter 163 to clear the counted value. Simultaneously therewith, the turn-over switch 165 supplies a start signal 176 to the second read counter 164. This disconnects the read signals 173 and starts the supply of the read signals 177 from the second read counter 164 to the second picture signal memory 162. As the result, Y-colour picture signals 174 whose position is registered are now started to be fed from the second picture signal memory 162 to the head driving circuit by way of the OR circuit 167.

In the same manner, Y-colour picture signals 174 whose position is adjusted are hereinafter issued alternately from the first and the second picture signal memories 161, 162. A printing head driving circuit drives the second thermal recording head 124 based on these Y-colour picture signals 174. As the result, recording takes place for the paper 140 with Y-colour signals in which colour displacement in the picture is compensated on every mark 142.

Such a control circuit for the registration of recording position is also provided to the third recording section for conducting cyan colour recording. Accordingly, when the second mark sensor 156 detects the mark 142 at the time point t4 subsequent to the time point t2 (Fig. 7e), a delay circuit not shown calculates the time T4 to be delayed. Then, the control circuit generates picture signals for recording cyan colour (hereinafter referred to as C-colour picture signals) with a delay in time T4 on every detection of the marks 142 (Fig. 7f). The third thermal recording head 135 is driven based on the C-colour signals alternately outputted from two picture signal memories not shown. As the result, recording takes place on the paper 140 with the C-colour picture signals in which colour displacement in the picture images are compensated on every mark 142.

In this arrangement, the colour displacement in the picture images can be compensated in the multi-colour recording device by itself without increasing the burden on the host system such as a word processor. Although the mark sensor is disposed near the transfer station in which thermal transfer recording takes place in this emobdiment, the pressure roll may be displaced slightly in the main scanning direction and the mark sensor may be disposed at a space produced thereby, whereby the position between the transfer station and the mark sensor can completely be coincident. Further, although this invention has been described for the embodiment of the multi-colour recording using three colours, that is, cyan, magenta and yellow, it will be apparent that this invention can also be applied to those multi-colour recording for two or any more colours.

Figure 10 shows a third example of the invention comprising a two-colour recording apparatus. The apparatus shown in Figure 10 comprises a p-colour recording station 201 and a g-colour recording station 202 which are extending radially of a common pressure roll 204, at an angle of about 90° to each other, i.e. they are circumferentially spaced around the roll 204.

If the recording operation is started, ordinary paper 203 begins to travel in the direction of an arrow C ast a speed which is equal to the peripheral velocity of the pressure roll 204. When the leading edge of the paper 204 has arrived in the vicinity of the p-colour thermal head 213, a p-colour ink donor sheet 212 begins to travel from a roll 211 to a roll 215. The paper 203 is sandwiched between the pressure roll 204 and the p-coloured ink donor sheet 212, and passes above the heating resistor in the p-colour thermal head 213, whereby p-colour information is recorded on the paper by heat transfer.

The leading edge of the paper 203 is then separated from the p-colour ink donor sheet 212, travels along a paper guide 205, and arrives in the vicinity of a g-colour thermal head 223. A g-colour ink donor sheet 222 begins to travel from a roll 221 to a roll 225, and when the paper 203 travels above the g-colour thermal head 223, a g-colour image is recorded on the paper in such a fashion that it may be properly positioned relative to the p-colour image.

If the back roll 204 has a diameter of 30 mm, the heating resistors in the two thermal heads 213 and 223 have a distance of about 24 mm from each other along the circumference of the back roll 204. Accordingly, it is sufficient to provide a memory capacity which is a half of what is required for a recording apparatus in which the heads are in a straight line and are associated with separate pressure rolls.

Since a plurality of thermal heads are positioned radially about a single pressure roll, this arrangement eliminates wrong positioning of differently coloured images which is likely to arise from any difference in diameter between pressure rolls. Furthermore, any such wrong positioning of differently coloured images is reduced, since the closer positioning of the thermal heads to each other contributes to minimizing the possibility of slackening of recording paper.

Although the embodiment shown in Figure 10 is directed to a two-colour recording apparatus, it is to be understood that this invention is equally applicable to a three- or more-colour recording apparatus.

Referring now to Figure 11, an ink donor sheet 317 withdrawn from the supply roll 313 in a first recording station 322 travels past a guide roll 325, a thermal recording head 311, adjacent a pressure roll 319, and another guide roll 326, and is wound on a take-up roll 315. Likewise, an ink donor sheet 318 in a second recording station 323 travels past a pair of guide rolls 327 and 328 positioned on the opposite sides of a thermal recording head 312, adjacent a pressure roll 321, and is wound on a take-up roll 316. The guide roll 326 is positioned in the vicinity of the second recording station 323 as shown in Figures 11 and 12. The transportation of the recording paper 302 from the first thermal recording head 311 to the second thermal recording head 312 is carried out by the ink donor sheet 317 from which an ink pattern has already been transferred onto the paper by the thermal action of the head 311. This transportation is performed reliably, since the molten ink maintains the recording paper 302 in intimate contact with the sheet 317.

The ink donor sheet 317 is folded back at an acute angle around the guide roll 326, as shown in Figure 12. The recording paper 302 is, however, so stiff that it is not folded back, irrespective of whether its leading edge has a portion which does not intimately contact the sheet 317 (or which does not carry any image recorded thereon). It moves forward, and is caught by the pressure roll 321. In other words, the paper 302 is properly separated from the ink donor sheet 317.

In order to further ensure the separation of the paper from the sheet, it may be useful to provide a guide member 329 in the vicinity of the guide rolls 326 as shown in Figure 13.

The transportation of recording paper to a region immediately in front of each thermal recording head in the second recording station or any further recording station following it is carried out by the ink donor sheet in the immediately preceding recording station with which the ink thereon maintains the paper in intimate contact, as hereinbefore described. This feature of the invention permits prevention of any skew on the recording paper during its transportation, and of any resulting displacement of the image transferred onto the paper.

Although the embodiment as hereinbefore described is directed to a two-colour recording apparatus having two recording stations, this feature is also applicable to a multi-colour recording apparatus including a further recording station or stations without causing any positional deviation of the recording paper 302 until the final recording station if any additional ink donor sheet or sheets is or are provided.

Figure 14 shows a multi-colour (two colour) recording device which comprises first and second thermal heads 404, 410 and a pair of pressure rolls in the form of belt pulleys 423, 424 spaced apart by a predetermined distance, pressure belt 425 being laid around these rolls. As shown in Figure 15, the pressure 425 comprises a first belt member 425A made of rubber material textured with glass fibres and a second belt member 425B made of rubber material alone, which are bonded to each other. The first belt member 425A is formed on both side ends 425A1 with teeth each of trapezoidal cross-section at a predetermined pitch, so that when the belt pulleys 423, 424 are driven in the direction of an arrow 426, the belt engages and receives driving force from grooves (not shown) provided on both ends of the circumferential surface of the pulleys to run the pressure belt 425 in the direction of an arrow 427 at a prescribed speed. While on the other hand, the second belt member 425B receives downward force from the belt pulleys 423, 424 so as to contact ink donor sheets 401, 407 or the recording paper sheet 416 under pressure in first and second recording regions 413, 419.

When an operator starts the operation for the device in such a multi-colour recording device, the recording paper sheet 416 is transported and the leading end thereof arrives near the first recording region 413. Then, a photosensor (not shown) detects the arrival of the recording paper sheet 416 to start the driving of the pair of belt pulleys 423, 424 and the first and the second feed rolls 406, 412. Thus, the recording paper sheet 416 is guided to the first recording region 413 between the first ink donor sheet 401 and the outer surface of the pressure belt 425. Then, heat transfer recording with, for example, red ink is carried out with the sheet 416 placed under pressure by the pressure belt 425 against the first ink donor sheet 401.

The recording paper sheet 416 is transported in accordance with the movement of the pressure belt 425 at the same speed as the belt velocity in the direction of an arrow 428. Then, the sheet advances while being guided along the guide 418 into the second recording region 419, wherein it undergoes heat transfer recording with black ink, for example. After the completion of recording, the recording paper sheet is discharged by a discharge roller (not shown) out of the device. A photosensor (not shown) detects the point when the rear end of the recording paper sheet 416 passes through the second recording region 419 so as thereby to stop driving of the pair of the belt pulleys 423, 424 and the first and the second feed rolls 406, 412.

Since the recording paper sheet is transported through each of the recording regions successively at a predetermined belt speed according to this invention, colour displacement due to uneven speed can be prevented. Since the sheet can be transported through each of the recording regions in contact with the belt, skewing of the recording paper sheet can also be inhibited so as thereby to prevent colour displacement in this sense also.

Although a two-colour recording device has been shown in Figure 14, it will be apparent that this feature can also be applied to recording devices of three or more colours.

**Claims**

1. A multicolour thermal transfer image recording device having a plurality of printing stations at each of which a different colour ink is applied to recording paper as it is fed through each of the printing stations in turn characterised in that each printing station includes a means for feeding a web of ink donor sheet material having a continuous coating of heat fusible or heat sublimating ink thereon over a thermal head for selectively heating said ink donor sheet material whilst it is in pressure contact with a recording paper sheet to transfer the heated ink to the recording sheet, and in that each printing station incorporates recording sheet driving means so that separate sheets of recording paper are transported in a predetermined path, the donor sheet material web feeding means and the thermal heads all being on one side of said path and each of the donor sheet material webs being arranged so that the associated web moves past the associated thermal head in contact with the recording paper sheets.

2. A device as claimed in Claim 1, comprising pressure roll means (21, 28 or 111, 121, 131 or 204, or 319, 321 or 423, 424, 425) arranged on the opposite side of the path of the recording paper sheets from the ink donor sheets and the thermal heads whereby the ink donor sheets and the recording paper sheets are pinched between the thermal heads and the pressure rolls.

3. A device as claimed in Claim 2, in which there are a plurality of separate pressure rolls associated respectively with the individual thermal heads, means (e.g. 205) being provided for guiding the record sheets along the aforesaid path between individual thermal heads.

4. A device as claimed in Claim 3 in which said guiding means comprises an endless belt (425) extending around said pressure rolls.

5. A device as claimed in Claim 3, in which said means is constituted by the ink donor sheets (e.g. 317) which are each arranged to follow a path adjacent the recording paper path at a position adjacent the next succeeding the thermal head.

6. A device as claimed in Claim 5, in which, at said position adjacent the next succeeding thermal head the path of the ink donor sheet is made to bend through a curve of radius (e.g. at 326) too small to be followed by the recording paper sheets.

7. A device as claimed in claim 6, in which a guide member (e.g. 329) is provided between said position and the next succeeding thermal head to guide the recording paper towards the pinch between the next succeeding thermal head and its associated pressure roll.

8. A device as claimed in Claim 2, in which there is a single pressure roll (204) with the thermal heads arranged at circumferentially spaced positions around such single pressure roll.

9. A device as claimed in claim 1, in which a thermal transfer marking device is associated with said first set and operates to produce on each sheet of recording paper as it passes said first set a series of spaced marks (142) at predetermined time intervals, the or each succeeding set incorporating a reading device (153, 156) arranged to read said marks so as to control the synchronisation of the operation of the thermal heads of the or each succeeding set with the passage of the recording paper sheet past such head.

10. A multi-colour copying machine including a multi-colour image recording device as claimed in any preceding claim in combination with a scanner unit for scanning an original document and operating to produce said picture element signals.

11. A machine as claimed in Claim 10, comprising memory means (94) for storing the picture element signals and control circuit means (82, 93, 96) for providing picture element signals to each thermal head in synchronism with the passage of a recording paper sheet past each thermal head.

**Revendications**

1. Dispositif d'enregistrement d'image par transfert thermique en plusieurs couleurs possédant plusieurs postes d'impression au niveau de chacun desquels une encre de couleur différente est appliquée au papier d'enregistrement, tandis que celui-ci avance au travers de chacun des postes d'impression à son tour, caractérisé en ce chaque poste d'impression comporte un moyen permettant de faire avancer une bande continue d'un matériau du type feuillet donneur d'encre présentant un revêtement continu d'une encre fondant à la chaleur ou se sublimant à la chaleur au-dessus d'une tête thermique afin de sélectivement chauffer ledit matériau du type feuillet donneur d'encre, tandis que celui-ci est en contact de pression avec une feuille de papier d'enregistrement afin de transférer l'encre chauffée à la feuille d'enregistrement, et en ce que chaque poste d'impression incorpore un moyen d'entraînement de feuille d'enregistrement, de sorte que des feuilles distinctes de papier d'enregistrement sont transportées suivant une trajectoire prédéterminée, les moyens faisant avancer la bande continue de matériau du type feuillet donneur d'encre et les têtes thermiques étant tous d'un premier côté de ladite trajectoire et chacune des bandes de matériau du type feuillet donneur d'encre étant disposée de façon que la bande continue associée passe devant la tête thermique associée en contact avec les feuilles de papier d'enregistrement.

2. Dispositif selon la revendication 1, comprenant des cylindres de pression (21, 28 ou 111, 121, 131 ou 204, ou 319, 321 ou 423, 424, 425) disposés du côté opposé de la trajectoire des feuilles de papier d'enregistrement par rapport aux feuillets donneurs d'encre et aux têtes thermiques, si bien que les feuillets donneurs d'encre et les feuilles de papier d'enregistrement sont pincés entre les têtes thermiques et les cylindres de pression.

3. Dispositif selon la revendication 2, dans lequel il existe plusieurs cylindres de pression distincts respectivement associés aux têtes thermiques, un moyen (par exemple 205) étant prévu pour guider les feuilles d'enregistrement le long de la trajectoire précitée entre les têtes thermiques distinctes.

4. Dispositif selon la revendication 3, dans lequel ledit moyen de guidage comprend une courroie sans fin (425) passant autour desdits cylindres de pression.

5. Dispositif selon la revendication 3, dans lequel ledit moyen est constitué par les feuillets donneurs d'encre (par exemple 317) qui sont chacun disposés de manière à suivre une trajectoire adjacente à la trajectoire du papier d'enregistrement en une position adjacente à la tête thermique immédiatement suivante.

6. Dispositif selon la revendication 5, dans lequel, à ladite position adjacente à la tête thermique immédiatement suivante, la trajectoire du feuillet donneur d'encre est amenée à s'incurver suivant une courbe de rayon (par exemple en 326) trop petit pour être suivie par les feuilles de papier d'enregistrement.

7. Dispositif selon la revendication 6, dans lequel un élément de guidage (par exemple 329) est prévu entre ladite position et la tête thermique immédiatement suivante afin de guider le papier d'enregistrement en direction de la zone de pincement formée entre la tête thermique immédiatement suivante et son cylindre de pression associé.

8. Dispositif selon la revendication 2, dans lequel il existe un unique cylindre de pression (204), les têtes thermiques étant disposées en des positions circonférentiellement écartées autour de cet unique cylindre de pression.

9. Dispositif selon la revendication 1, dans lequel un dispositif de repérage de transfert thermique est associé audit premier ensemble et a pour fonction de produire sur chaque feuille de papier d'enregistrement, tandis que celle-ci passe devant ledit premier ensemble, une série de repères distincts (142) à des intervalles de temps prédéterminés, l'ensemble ou chaque ensemble suivant incorporant un dispositif de lecture (153, 156) destiné à lire lesdits repères afin de commander la synchronisation du fonctionnement des têtes thermiques de l'ensemble ou de chaque ensemble suivant avec le passage de la feuille de papier d'enregistrement devant cette tête.

10. Machine à copier en plusieurs couleurs, comportant un dispositif d'enregistrement d'image en plusieurs couleurs tel que revendiqué dans l'une quelconque des revendications précédentes, en combinaison avec une unité de balayage servant à balayer un document original et ayant pour fonction de produire lesdits signaux d'élément d'image.

11. Machine selon la revendication 10, comprenant une mémoire (94) servant à emmagasiner les signaux d'élément d'image et un circuit de commande (82, 93, 96) servant à produire des signaux d'élément d'image à destination de chaque tête thermique en synchronisme avec le passage d'une feuille de papier d'enregistrement devant chaque tête thermique.

**Patentansprüche**

1. Gerät zur Aufzeichnung vielfarbiger Bilder mit thermischer Übertragung, enthaltend eine Mehrzahl von Druckstationen, an denen jeweils ein andersfarbiger Farbstoff dem Aufzeichnungspapier zugeführt wird, wenn es nacheinander durch jede der Druckstationen geführt wird, dadurch gekennzeichnet, daß jede Druckstation eine Einrichtung enthält zum Zuführen einer Bahn aus Farbstoffgeber-Blattmaterial mit einer durchgehenden Beschichtung aus wärmeschmelzbarem oder unter Wärme sublimierenden Farbstoff darauf über einen Thermokopf zum selektiven Erwärmen des Farbstoffgeberblattmaterials, während es in Druckkontakt mit einem Aufzeichnungspapierblatt ist, um den aufgewärmten Farbstoff auf das Aufzeichnungsblatt zu übertragen, und daß jede Druckstation eine Aufzeichnungsblatt-Antriebseinrichtung enthält, das getrennte Aufzeichnungspapierblätter auf einem vorbestimmten Weg transportiert werden, wobei die Geberblattmaterialbahn-Zuführungseinrichtung und die Thermoköpfe sämtlich auf einer Seite des genannten Weges liegen und jede der Geberblattmaterialbahnen so angeordnet ist, daß die zugehörige Bahn sich an dem zugehörigen Thermokopf in Berührung mit den Aufziechnungspapierblättern vorbeibewegt.

2. Gerät nach Anspruch 1, enthaltend Druckwalzeneinrichtungen (21, 28 oder 111, 121, 131 oder 204, oder 319, 321 oder 423, 424, 425), die auf der den Farbstoffgeberblättern und den Thermoköpfen gegenüberliegenden Seite des Weges der Aufzeicnnungspapierblätter angeordnet sind, wodurch die Farbstoffgeberblätter und die Aufzeichnungspapierblätter zwischen den Thermoköpfen und den Druckwalzen eingeklemmt werden.

3. Gerät nach Anspruch 2, bei dem eine Mehrzahl von getrennten Druckwalzen jeweils den einzelnen Thermoköpfen zugeordnet sind und wobei eine Einrichtung (z.B. 205) vorgesehen ist, die die Aufzeichnungsblätter längs des vorgezeichneten Weges zwischen den einzelnen Thermoköpfen führt.

4. Gerät nach Anspruch 3, bei dem die Einrichtung einen Endlosriemen (425) enthält, der sich um die genannten Druckwalzen erstreckt.

5. Gerät nach Anspruch 3, bei dem die Einrichtung von den Farbstoffgeberblätern (z.B. 317) gebildet ist, die jeweils so angeordnet sind, daß sie einem Weg benachbart dem Aufzeichnungspapierweg an einer Stelle benachbart dem nächstfolgenden Thermokopf folgen.

6. Gerät nach Anspruch 5, bei dem an der genannten Stelle benachbart dem nächstfolgenden Thermokopf der Weg des Farbstoffgeberblattes so gestaltet ist, daß er über eine Kurve (z.B. bei 326) von zu kleinem Radius abgebogen ist, als daß er von den Aufzeichnungspapierblättern gefolgt werden könnte.

7. Gerät nach Anspruch 6, bei dem ein Führungsglied (z.B. 329) zwischen der genannten Stelle und dem nächstfolgenden Thermokopf angeordnet ist, um das Aufzeichnungspapier gegen den Spalt zwischen dem nächstfolgenden Thermokopf und seiner zugehörigen Druckwalze zu führen.

8. Gerät nach Anspruch 2, bei dem eine einzige Druckwalze (204) vorgesehen ist, wobei die Thermoköpfe in in Umfangsrichtung verteilten Positionen um diese einzige Druckwalze angeordnet sind.

9. Gerät nach Anspruch 1, bei dem eine thermische Übertragungsmarkierungsvorrichtung dem ersten Satz zugeordnet ist und dazu eingerichtet ist, auf jedem Aufzeichnungspapierblatt beim Druchlaufen des ersten Satzes eine Serie von beabstandeten Markierungen (142) in vorbestimmten Zeitintervallen anzubringen, wobei der oder jeder nachfolgende Satz eine Leseeinrichtung (153, 156) enthält, die dazu eingerichtet ist, diese Markierungen zu lesen, um die Synchronisierung des Betriebs der Thermoköpfe des oder jeden nachfolgenden Satzes mit dem Vorbeilauf des Aufzeichnungspapierblatts an diesem Kopf zu steuern.

10. Vielfarbkopiermaschine, enthaltend ein Gerät zur Aufzeichnung vielfarbiger Bilder nach einem der vorhergehenden Ansprüche in Kombination mit einer Abtastereinheit zum Abtasten eines Originaldokuments und dazu eingerichtet, die Bildelementsignale zu erzeugen.

11. Maschine nach Anspruch 10, enthaltend eine Speichereinrichtung (94) zum Speichern der Bildelementsignale und eine Steuerschaltungsanordnung (82, 93, 96) zum Erzeugen von Bildelementsignalen für jeden Thermokopf synchron mit dem Vorbeilauf eines Aufzeichnungspapierblatts an jedem Thermokopf.

FIG.1.

51

75 ○ NORMAL
76 ○ FULL BLACK
77 ○ RED CUT - OUT

MODE ─73

78 ○ 125%
79 ○ 100%
81 ○ 75%

MAG ─74

71 ○ NORMAL ○ DARK ○ B4
72 ○ LIGHT 67 68 69 ○ LIGHT 63
NORMAL A4
64

RED ─66    BLACK ─65

START ─59    STOP ─61

○ TROUBLE
62

○ POWER
54

OFF ─53    ON ─52

0 1 ─56    0 0 ─57

7 8 9
4 5 6
0 1 2 3
55
CLR ─58

FIG.2.

FIG.3.

FIG. 4.

FIG.5.

FIG.6.

FIG.7.

0 050 481

FIG.8.

FIG.9.

FIG. 10.

FIG. 11.

FIG.12.

FIG.13.

FIG.14.

FIG.15.